# EUROPEAN PATENT APPLICATION

(11) **EP 1 763 202 A1**
(43) Date of publication of application: **14.03.2007**
(21) Application number: 05077063.5
(22) Date of filing: 08.09.2005
(51) Int. Cl.: H04L 29/12

(54) **Method and system for redirecting a name resolution request in an IP network environment**

(71) Applicant: Koninklijke KPN N.V., 2516 CK The Hague (NL)
(72) Inventor: de Graaff, Michiel, 3813 MH Amersfoort (NL)
(74) Representative: Wuyts, Koenraad Maria

(57) **Abstract**

It is disclosed that a webserver (4) hosted by a second host (8) can be used for redirecting in an IP environment an initial request comprising an identifier. The Identifier can be used for referring to a sub-domain that does not have its own IP-address. When via a browser an initial request is entered or selected, the initial request is sent to a DNS (7). The DNS (7) returns the IP address of the second host (8) to the browser. The browser receives this IP address after which the browser sends a request for the first domain name to the webserver (4). Upon receiving this request the webserver (4), accesses a database in order to return to the browser a domain name based on the identifier comprised by the request When the browser has received the domain name, the browser sends another request comprising the domain name to the DNS (7), after which the appropriate webcontent in the sub-domain can be accessed.

## Description

### FIELD OF THE INVENTION

The present invention relates to a method and a system for redirecting initial HTTP requests in an IP environment.

### BACKGROUND OF THE INVENTION

In communication and data networks IP (Internet Protocol) is a commonly used communication protocol. In IP based networks a device such as a host is identified with a unique IP-address. For human beings however it is more convenient to use names instead of IP-addresses for addressing devices in an IP related environment. Therefore, URL's (Uniform Resource Locator) via which devices or, in the case of www (world wide web), websites can be addressed. A URL may contain a domain name (i.e. the domain name appears in the URL) and optionally the name of a directory or file that is comprised by the domain. For devices that are connected to or comprised by an IP based network the domain name should be translated into an IP address. This translation is accomplished by a domain name server (DNS). A DNS is a database that can receive requests from a browser and translates the domain name comprised by a request into an IP address. The DNS sends this IP address then to the requesting browser so that the browser is able to access the appropriate device or website.

### PROBLEM DEFINITION

A DNS is not able to return upon a request an adequate reference to a sub-domain (such as a directory or a file) that is comprised by a domain if that sub-domain does not have its own IP-address. An example of a sub-domain without its own IP-address comprised by a domain is a (user-)website of an Internet user, which (user-)website is hosted by an Internet Service Provider (ISP). The (user-)website is then present as a directory or file within the domain of the ISP. What can be returned by a DNS is an IP address (or another domain name), but this is not sufficient for addressing a (user-)website that is hosted by an ISP. In other words, a DNS can return the IP-address of the domain but the DNS cannot return a specific reference to a sub-domain if that sub-domain has not its own IP-address. As a consequence, an initial request that contains a specific reference to a domain (e.g. a domain name such as 'company.com') but no specific reference to a sub-domain (e.g. an extension referring to a file such as '/file.html') cannot be redirected to the appropriate subdomain. Upon the receipt of such a request the DNS can only return the IP-address that is associated with the domain name. The information that enables the initial request to be redirected to the appropriate sub-domain is then still not available if that information was not contained in the initial request. A problem arises if a sub-domain should be addressable via an identifier contained in the initial request, whereby the identifier does not comprise a domain name plus a reference to a sub-domain. For instance, if the identifier is a name such as 'sub-domain.com' the DNS will not return an IP address if 'sub-domain.com' has not its own IP-address (if 'sub-domain.com' does have its own IP-address the DNS does return an IP-address, but in fact 'sub-domain.com' is then the name of a domain). The DNS will thus based on such identifier not return information to the browser that can be used for redirecting the initial request to the appropriate sub-domain within a domain.

### AIM OF THE INVENTION

It is an object of the invention to eliminate the drawbacks of the prior art and to provide a method for redirecting in an IP environment a request to a sub-domain.

### SUMMARY OF THE INVENTION

It is disclosed that an initial request from a browser on a user device such as a HTTP (HyperText Transfer Protocol) request can be redirected using a webserver that is configured for redirecting requests. A HTTP request can in general be sent by the browser in a URL (Uniform Resource Locator). A URL contains a reference to the application (WWW) and the protocol that is used (HTTP). A URL can contain a reference to a domain name, for instance the domain name kpn.com like in the URL http://www.kpn.com. A URL can also contain a reference to a sub-domain, such as a directory or a file, that is comprised by a domain. In this way it is possible to address with a URL a specific webpage comprised by a website. For instance, with the URL http://www.kpn.com/webpageA it is possible to address webpageA that is comprised by the domain kpn.com.

In an aspect of the invention a domain name server (DNS) is configured such that the DNS returns to the browser the IP address of a webserver after the DNS has received an identifier contained in an initial request. An identifier can be a name with a format similar to the format of a domain name. However the identifier is not a real domain name, i.e. there is not a specific IP address that is associated to the identifier. In the prior art an identifier will not cause a DNS to return an IP-address unless the identifier is a domain name. Generally, a domain name is registered within the Internet community and it is thus known which domain name corresponds to which IP-address.

In a storage means comprised by or accessible for the DNS the identifiers can be stored for which the DNS returns the IP address of the webserver to the browser. When the browser on the user device has received the IP address of the webserver from the DNS, the browser sends another request comprising the same identifier that was comprised by the initial request to the webserver. Upon receiving this request the webserver can access a database (for instance using a CGI script) whereby the identifier is inputted to the database. The database can look up a domain name plus a reference to a sub-domain that correspond to the identifier. The domain name may or may not be different from the identifier comprised by the initial request. The database can reside at a host that hosts the webserver or at any other device connected to the IP based network. It is also possible that the database is not directly connected to the IP based network. For instance, the database could be connected to the second host via a local or private network. This local or private network may or may not be based on IP. The webserver (4) will send the domain name and the reference to the sub-domain to the browser on the user device (1). Instead of a domain name and a reference to a sub-domain it may also be possible that an IP address and a reference to a sub-domain is returned by the database. When the browser has received the domain name (or IP address) and the reference to the sub-domain, the browser uses this to construct the appropriate URL (for instance http://wwwISP.com/userA) for accessing the sub-domain (for instance the user-website of userA).

An advantage of the present invention is that a user can use a relatively simple URL for accessing a sub-domain that normally not can be identified with a relatively simple URL (e.g. when userA.com is not specifying a specific domain plus sub-domain). In other words, it is possible now to redirect to a specific sub-domain comprised by a domain by means of a relatively simple identifier in the initial request and without specifying the domain and the sub-domain in the initial request. This is an advantage since an extension (for specifying the sub-domain) comprised by an URL can consist of many characters. It is more convenient for a user to use (and to remember) a shorter or simpler URL without extension to identify a sub-domain comprising a webpage or a group of webpages.

Another advantage of the present invention is that there are less update activities needed for updating the DNS. An update (which is in some cases not even needed) requires configuring the DNS such that the DNS refers to the webserver.

Also with regard to situations in which a domain is hosted on a virtual server the present invention is advantageously, i.e. in the situation that for instance http://www.domainX.nl should cause a redirection to the domain domainX.com and the domain domainX.com is hosted on a virtual webserver. When the domain name domainX.nl is sent to the DNS, the DNS returns the IP address of the virtual host where domainX.com is running. However, the browser will then requestthis virtual host for access to domainX.nl. DomainX.nl, however, is not known at the virtual host and is thus not able to service the browser on basis of this request. The only way to overcome this in the state of the art is to configure a new virtual webserver for the domain domainX.nl, which configuration requires a restart of the host that hosts this virtual webserver (a new virtual host has to be created that points to the content of the existing virtual host). This problem is solved because the database can (via the webserver) return on basis of domainX.nl the domain name domainX.com. The domain name domainX.com will be returned to the browser on the user device , after which domainX.com will be send to the DNS. The DNS sends the IP address of the virtual webhost that runs domainX.com to the browser on the user device. The browser sends then the URL http://www.domainX.com to the virtual webhost that runs the domainX.com and domainX.com can be accessed via the browser. In this way, a domain that runs on a virtual webserver can be accessed via another domain name. Thus, it is not required for a user in the initial request to enter the name of the domain that runs on a virtual webserver; it may also enter another domain name that is specified in the database connected to the webserver.

### BRIEF DESCRIPTION OF THE DRAWING FIGURE

The foregoing aspects and many of the attendant advantages of this invention will be explained by reference to the following detailed description, when taken in conjunction with the accompanying drawing, wherein:
FIG. **1** is a block diagram illustrating an IP based network (5) wherein requests can be sent from a browser to a device that is comprised by or connected to the IP based network (5).
FIG. **2** is a block diagram illustrating the webserver (4) via which a request can be redirected.
FIG. **3** is a flow diagram illustrating the information exchange between the browser, the DNS (7) and the webserver (4).

### EXEMPLARY EMBODIMENTS

For the purpose of teaching of the invention, preferred embodiments of the method and devices of the invention are described in the sequel. It will be apparent to the person skilled in the art that other alternative and equivalent embodiments of the invention can be conceived and reduced to practice without departing form the true spirit of the invention, the scope of the invention being limited only by the appended claims as finally granted.

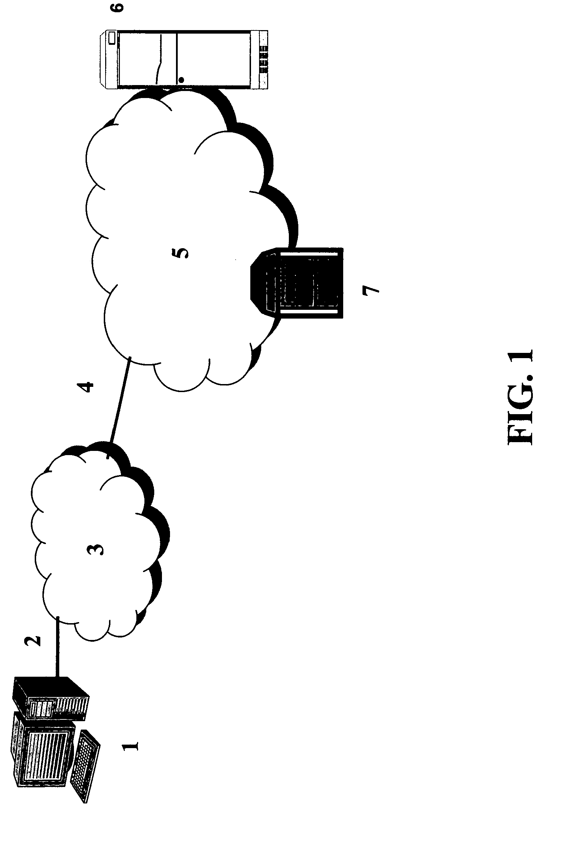

FIG. **1** shows a user device (1) such as a personal computer or a laptop. The user device may also be a wireless device such as a mobile handset. The user device (1) can be used for accessing services that are provided via an IP based architecture. This IP based architecture can be the Internet or a private IP based architecture. The services that can be used may for instance be information services, communication services, games, or any type of content services. There is in general a browser available on the user device (1) via which browser Internet content and services can be accessed. The user device (1) also comprises in general means for setting up a connection (2) between the user device (2) and a point of presence (3) of an Internet Service Provider. The connection (2) can be accomplished via any type of communication network such as but not limited to PSTN (Public Services Telephony Network), ISDN (Integrated Service Digital Network), GSM, UMTS (Universal Mobile Telecommunications System) or a satellite network. It may also be possible that xDSL is used for connection (2), such as ADSL (Asymmetric Digital Subscriber Line), SDSL (Symmetric Digital Subscriber Line) or VDSL (Very-High-Rate Digital Subscriber Line). The point of presence (3) is in general connected to an IP based network (5) such as the Internet. On the Internet (and also in other IP based networks) devices that are connected to the Internet have their own IP address. The IP address is a unique address via which a device can be identified. Generally IP addresses are 32-bit numbers expressed as four octets in a dotted decimal number, such as aaa.bbb.ccc.ddd. The four numbers in an IP address are called octets because they can have values between 0 and 255 (2⁸ possibilities per octet). Every device on the Internet has its own IP address. A server has a static IP address that does not change very often. A user device (1) that is setting up a connection with the point of presence (3) has an IP address that is assigned by the ISP (Internet Service Provider) where is dialled in.

An IP address can for instance be used when a website is accessed via a browser. The IP address identifies the device where the website resides. For users however it is more convenient to use names instead of IP addresses for addressing devices in an IP related environment. Therefore, URL's (Uniform Resource Locator) are used. A URL contains a reference to the application (WWW) and the protocol that is used (HTTP). WWW stands for World Wide Web and HTTP stands for HyperText Transfer Protocol. HTTP is the underlying protocol used by the World Wide Web. HTTP defines how messages are formatted and transmitted, and what actions web servers and browsers should take in response to various commands. For example, when an URL in a browser is entered, the browser sends an HTTP command to the Internet server directing it to fetch and transmit the requested web page. Further, the URL contains a reference to a domain name, for instance the domain name 'kpn.com' in the URL http://www.kpn.com. A domain name server (DNS) (7)can translate the domain name into a machine-readable IP address. There are many DNS's on the Internet, but often a user device (1) has a preferred DNS that is defined in the software of the user device (1) or that is supplied by the ISP to the user device (1) during Internet connection setup phase. The IP address that is outputted by the DNS (7) is in generally sent to the user device (1) so that a host (6) that hosts the domain kpn.com can be addressed. A domain is often called a website and the 'root' page of a website is often called the homepage. A website is made accessible to the browser on the user device (1) via a webserver that resides at host (6).

Via the user device (1) the website (e.g. kpn.com) can then be accessed. On the home page of a website there may in general be links to other webpages of the website or links to other websites. It is also possible that a webpage is directly addressed via a URL. This can be accomplished by adding an extension to the URL for instance '/page_1'. In this latter case the URL is for instance http://www.kpn.com/page 1. When a DNS (7) receives such a URL, the DNS (7) will translate the domain name contained by the URL into the IP address of the host (6) that hosts the domain or website. The browser uses the extension '/page_1' for identifying the right webpage comprised by the website. It is also possible that an IP address is used in the URL instead of a domain name. It is then in general not needed to use the DNS (7) if the IP address is already known.

As has been shown before, it is in the state of the art needed for identifying a sub-domain (e.g. one or more web pages) comprised by a website to use an extension in the URL. This extension can consist of many characters. Therefore, it can be convenient for a user to use a shorter or simpler URL without extension to identify a webpage or a group of webpages that is comprised by a domain. An advantage can be that a URL without extension is easier to remember by the user. Another advantage can appear in the case that a user that is subscribed to an Internet Service Provider has its own user-website on the Internet. This user-website is provided by the Internet Service Provider and is part of the domain of the Internet Service Provider. The user-website is in general comprised of one or more webpages that reside in a directory under the domain of the Internet Service Provider (i.e. the user-website is a sub-domain of the domain of the Internet Service Provider), and the user-website may not have its own IP-address. In FIG. 1 the domain of the Internet Service Provider is hosted by host (6). As an example, the URL for identifying the user-website of userA could be http://www.ISP.com/userA. The domain name ISP.com would be translated by the DNS (7) into the IP address of the host (6). The extension '/userA' would refer to the sub-domain (e.g. a subdirectory) present at host (6) that contains the user-website of userA. In general, host (6) hosts also many other user-websites.

The usage of a relatively simple URL for identifying the user-website of userA cannot be for instance http://www.userA.nl because the DNS (7) would not be able to return an IP-address because userA.nl has not its own IP-address (if userA.nl would have its own IP-address then userA.nl would be a domain name and not the name of a sub-domain). It is thus not possible in such a situation to use an identifier such as 'userA.nl' for redirecting a request to the user-website that resides at host (6). However, a URL in the format http://www.userA.nl would be a user-friendly and recognizable format (provided that the domain userA.nl is not reserved for another website).

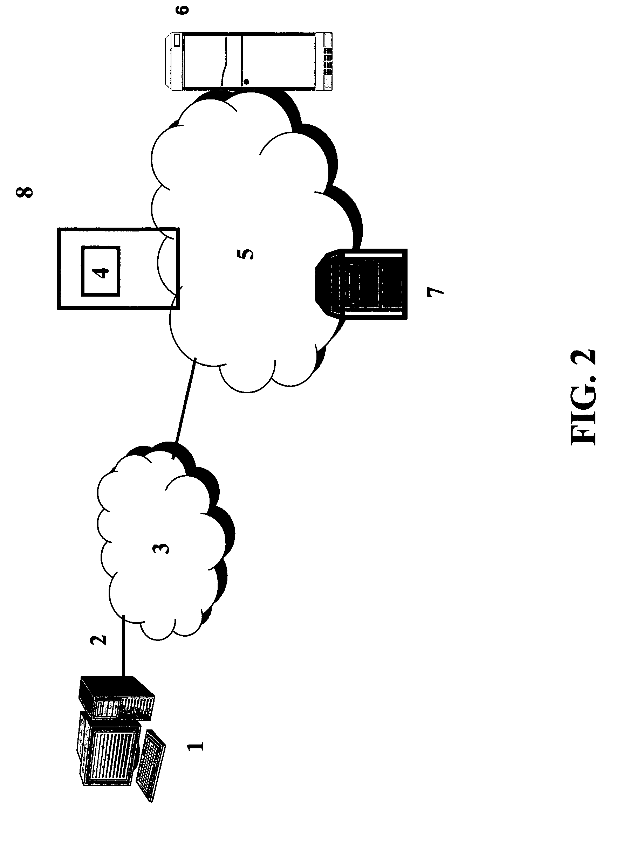

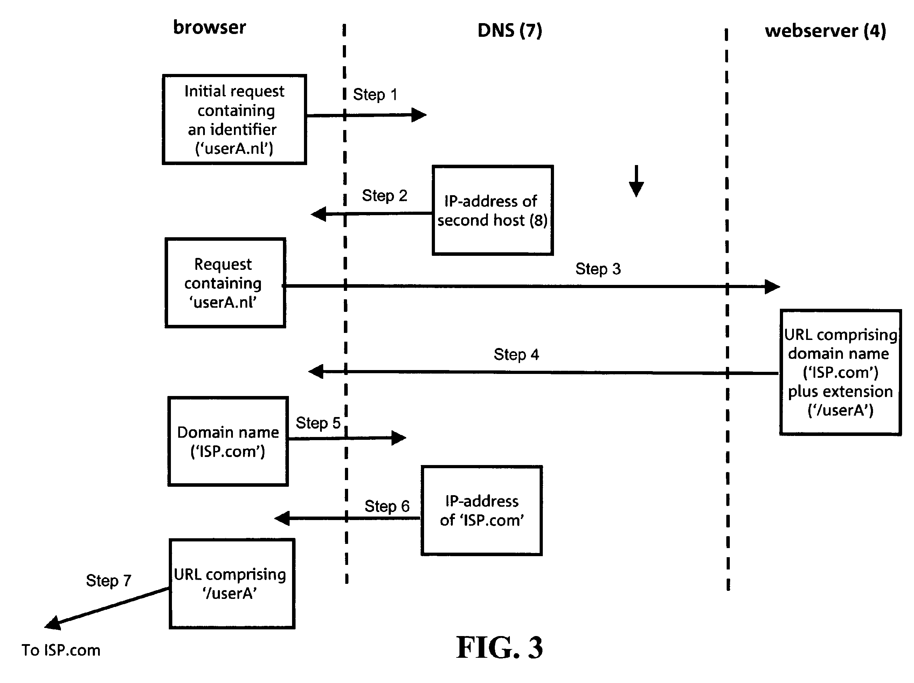

In FIG. **2** an architecture according to the present invention is depicted. There is a second host (8) that hosts a webserver (4). The second host (8) is connected to the IP based network (5). The webserver (4) functions in the process of redirecting requests from browsers in a way as described in the following. FIG. 3 illustrates for a possible embodiment the exchange of information exchange between the browser, the DNS (7) and the webserver (4). If via the browser an URL containing an identifier such as http://www.userA.nl is entered or selected the DNS (7) will be accessed in order to translate the identifier 'userA.nl' into an IP address (step 1). However, 'userA.nl' is not the name of a domain and thus the DNS (7) cannot return an IP address. Instead, the DNS (7) will recognise that the IP address of the second host (8) should be returned to the browser. The browser on the user device (1) will receive this IP address (step 2) after which the browser sends a request containing userA.nl to the webserver (4) (step 3). Upon receiving this request the webserver will start a CGI script causing a database (not depicted in the figure) to be accessed on basis of the identifier (in this case userA.nl). The database will look up a corresponding domain name plus extension (for instance 'ISP.com' respectively '/userA'). The database can reside at the second host (8) or at any other device connected to the IP based network. It is also possible that the database is not directly connected to the IP based network (5). For instance, the database could be connected to the second host (8) via a local or private network. This local or private network may or may not be based on IP.

The webserver (4) will send a URL comprising the domain name ('ISP.com') plus the extension ('/userA') to the browser on the user device (1) (step 4). Instead of a domain name plus an extension it may also be possible that an IP address plus an extension is returned by the database. When the browser has received the domain name (or IP address) plus an extension, the browser uses this to construct the appropriate URL (for instance http://wwwISP.com/userA). A request containing the domain name 'ISP.com' is sent to the DNS (7) (step 5) upon which the DNS (7) returns the IP-address corresponding to 'ISP.com' (step 6). Using this IP-address received from the DNS (7) and the extension identifying the sub-domain, the sub-domain (user-website 'userA') can be accessed (step 7). An advantage of this approach is that a user can use an identifier in a URL for accessing a sub-domain (e.g. a user-website) that normally not can be identified with this identifier. In other words, it is possible now to redirect to a specific directory or file comprised by a domain without specifying that directory or file in the initial request entered by the user.

Another advantage of the present invention is that there are less update activities needed for updating the DNS (7). An update (which is in some cases not even needed) requires configuring the DNS (7) such that the DNS (7) refers to the webserver (4).

Also with regard to another situation the present invention is advantageously, i.e. in the situation that http://www.domainX.nl should cause a redirection to the domain domainX.com and the domain domainX.com is hosted on a virtual webserver. The redirection can sometimes be desirable, for instance because it enables users to access the domain domainX.com also using the domain name domainX.nl. Here, domainX.com is a domain (in the previous example it was sub-domain that was referred to). The DNS (7) should be able to supply the browser on the user device (1) with the appropriate information in order to access domainX.com. However, because domainX.com is hosted by a virtual webserver there will still be a problem in the state of the art. In general more than one virtual host can be running at a device such as host (6). Each virtual host can have assigned their own IP address. When the domain name domainX.nl is sent to the DNS (7), the DNS (7) returns the IP address of the virtual host where domainX.com is running. However, the browser will then request this virtual host for access to domainX.nl. DomainX.nl, however, is not known at the virtual host and is thus not able to service the browser on basis of this request. The only way to overcome this in the state of the art is to configure a new virtual webserver for the domain domainX.nl, which configuration requires a restart of the host that hosts this virtual webserver (a new virtual host has to be created that points to the content of the existing virtual host).

According to the invention this problem is solved because the database can (via the webserver (4)) return on basis of domainX.nl the domain name domainX.com. The domain name domainX.com will be returned to the browser on the user device (1), after which domainX.com will be send to the DNS (7). The DNS (7) sends the IP address of the virtual webhost that runs domainX.com to the browser on the user device (1). The browser sends then the URL http://www.domainX.com to the virtual webhost that runs the domainX.com and domainX.com can be accessed via the browser. In this way, a domain that runs on a virtual webserver can be accessed via another domain name. Thus, it is not required for a user in the initial request to enter the name of the domain that runs on a virtual webserver; it may also enter another domain name that is specified in the database connected to the webserver (4).

## Claims

1. An IP based network (5) comprising a domain name server (7) and a webserver (4) hosted by a second host (8), the webserver (4) being configured for accessing a database, the domain name server (7) being configured for translating an identifier received in an initial request from a browser into an IP address of the second host (8), the webserver (4) being configured for sending the identifier to said database and said database being configured for returning a domain name on basis of the identifier.

2. An IP based network (5) according to claim 1, wherein said database also is configured for returning a reference to a sub-domain on basis of the identifier.

3. An IP based network (5) according to claim 2, wherein said sub-domain is a directory or file.

4. An IP based network (5) according to claim 1, 2 or 3, the IP based network (5) being the Internet.

5. An IP based network (5) according to any of the preceding claims, the IP based network (5) being a wireless network.

6. A method for redirecting in an IP based network (5) an initial request from a browser comprising an identifier, the method comprising the steps of:
receiving the initial request by a domain name server (7);
returning by the domain name server (7), on basis of said identifier, to the browser the IP address of a second host (8) that hosts a webserver (4);
sending by the browser a request comprising said identifier name to webserver (4);
returning, based on said identifier, a domain name by the webserver (4) to the browser; and
sending by the browser a second request comprising said domain name to the domain name server (7).

7. A method according to claim 6, wherein the webserver (4) also return on basis of said identifier a reference to a sub-domain, and wherein the second request from the browser to the domain name server (7) comprises said reference to a sub-domain in addition to the domain name.

8. A method according to claim 7, wherein said sub-domain is a directory or file.

9. A webserver (4) that is configured to receive an identifier comprised in a request from a browser, to access a database, to receive on the basis of said identifier from said database a domain name, and to send the domain name to said browser.

10. A webserver (4) according to claim 9, wherein on the basis of said identifier also a reference to a sub-domain can be received from said database and the webserver (4) is able to send in addition to the domain name also said reference to a sub-domain to said browser.

11. A webserver (4) according to claim 10, the webserver (4) being integrated with a domain name server (7).
